# FASCICULE DE BREVET EUROPEEN

(11) **EP 2 334 559 B1**
(45) Date de publication et mention de la délivrance du brevet: **05.12.2012**
(21) Numéro de dépôt: 09748383.8
(22) Date de dépôt: 05.10.2009
(51) Int. Cl.: B64D 33/08

(54) **AGENCEMENT D'ENTRÉE D'AIR POUR AÉRONEF**
LUFTEINLASSANORDNUNG FÜR EIN LUFTFAHRZEUG
AIR INTAKE ARRANGEMENT FOR AN AIRCRAFT

(30) Priorité: 07.10.2008 FR 0805525
(43) Date de publication de la demande: 22.06.2011
(73) Titulaire: AIRBUS OPERATIONS (SAS), 31060 Toulouse (FR)
(72) Inventeur: PORTE, Alain, F-31770 Colomiers (FR); CHANCERELLE, Emeric, F-31200 Toulouse (FR); ALVAREZ, Franck, F-31300 Toulouse (FR); PRAT, Damien, F-31770 Colomiers (FR)
(74) Mandataire: Gevers France
(86) Numéro de dépôt international: PCT/FR2009/001179
(87) Numéro de publication internationale: WO 2010/040911

(56) Documents cités:
- FR-A- 2 879 563
- FR-A- 2 879 564
- FR-A- 2 915 461
- US-A- 4 174 083

## Description

La présente invention concerne un agencement d'entrée d'air pour aéronef comportant un canal de passage d'air avec un orifice de prise d'air.

On sait que de tels agencements d'entrée d'air sont largement employés dans le domaine aéronautique à des fins de renouvellement de l'air dans une zone confinée contenant des matériels thermiquement sensibles et/ou des milieux ambiants dangereux, du type inflammable ou détonant, pour lesquels il est nécessaire d'assurer une ventilation continue de la zone pour éviter tout risque de dysfonctionnement des matériels ou d'incident environnant.

Tel est notamment le cas de nombreux dispositifs mécaniques et/ou électriques prévus dans la zone confinée annulaire entre la nacelle et le carter externe de la soufflante et des compresseurs d'un turboréacteur d'aéronef. Ces dispositifs, comme par exemple le fadec (full authority digital engine control), le boîtier relais d'accessoires (gearbox), le réservoir d'huile moteur, les composants fluidiques, etc ..., généralement fixés tout autour du carter externe et situés ainsi dans la zone confinée, sont ventilés par de l'air extérieur entrant dans l'agencement par l'orifice de prise d'air pour traverser le canal ménagé dans la nacelle et se diffuser, en sortie du canal, dans la zone confinée. Les dispositifs, de même que les vapeurs d'huile ou autres émanant de cette zone, sont ventilés par l'air frais extérieur diffusé par le canal d'air, contribuant à assurer leur bon fonctionnement.

Pour répondre à la réglementation en vigueur qui impose un renouvellement de l'air approprié par unité de temps de la zone confinée concernée, le canal de passage d'air de l'agencement a une section transversale prédéterminée permettant la circulation d'une quantité d'air suffisante dans le canal pour assurer, à sa sortie, le renouvellement d'air de la zone confinée contenant les dispositifs à ventiler.

Cependant, comme la quantité d'air extérieur entrant dans le canal d'air à section transversale prédéterminée est notamment fonction de paramètres liés à la vitesse de l'aéronef et à l'altitude de ce dernier, il est difficile de ventiler de façon optimale les dispositifs à refroidir et les vapeurs à chasser.

En effet, si l'air extérieur entrant en amont par l'orifice de prise d'air dans le canal à section transversale prédéterminée de l'agencement et sortant en aval de celui-ci est suffisant pour ventiler correctement les dispositifs lorsque l'aéronef est en phase de roulage au sol, en phase de décollage ou en phase d'attente, donc à vitesse et altitude faibles, en revanche, lorsque l'aéronef est en phase de vol de croisière à une vitesse et une altitude maximales, le débit d'air sortant du canal de l'agencement en direction de la zone à ventiler est trop important. Des mesures ont permis de constater que, dans cette phase de vol, l'air circulant dans la zone confinée à travers le canal de l'agencement était renouvelé deux fois plus que nécessaire. Par ailleurs, l'air entrant dans la zone confinée engendre des traînées, ce qui se traduit par une perte de vitesse pour l'aéronef, et donc une augmentation de consommation dudit moteur en combustible.

Pour remédier à ces inconvénients, les documents WO-2006/067296 (FR 2879563) et WO-2006/067299 (FR 2879654) décrivent des agencements d'entrée d'air comportant des moyens d'obturation à élément mobile commandable, associés audit canal de passage d'air, et des moyens de commande dudit élément mobile actionnés, soit volontairement par le pilote dudit aéronef, soit, avantageusement, de façon automatique. Dans ce dernier cas, lesdits moyens de commande comportent un réservoir de volume variable -ensemble cylindre/piston, vessie, soufflet, etc ...- qui reçoit la pression Totale exercée sur ledit aéronef par l'air et qui est relié audit élément mobile commandable. Cependant, la pression n'étant pas stable localement, ce système ne peut être optimal. De plus, ces moyens de commande sont lourds par rapport à leur environnement et ils ont tendance à engendrer des phénomènes de vibrations ou de balourd nécessitant un renfort de l'ensemble, ce qui alourdit considérablement ledit agencement d'entrée d'air. Or, afin de limiter la consommation en carburant des aéronefs, les concepteurs ont pour objectif de créer des systèmes plus légers.

Aussi, pour remédier à ces derniers inconvénients, le document FR 2915461 présente un agencement d'entrée d'air comprenant des moyens d'obturation à lame élastique commandable, associés audit canal de passage d'air, et des moyens de commande de la lame élastique formés par un profilé aérodynamique disposé transversalement audit canal de passage d'air et fixé à une extrémité de ladite lame élastique et apte à engendrer une force de portance sous l'action du flux d'air extérieur traversant le canal. Cependant, des micro-fissures sont susceptibles d'apparaître sur la structure du profilé, notamment au niveau de sa fixation avec la lame élastique, principalement du fait de la vitesse du flux d'air et de la pression élevées exercées sur le profilé, ce qui peut réduire considérablement la durée de vie et l'efficacité dudit agencement.

La présente invention a pour objet de remédier à ces inconvénients et elle concerne un agencement d'entrée d'air dont la conception permet d'assurer une ventilation optimale d'une zone confinée telle que celle précédemment décrite concernant un turboréacteur, mais qui peut être également une zone de feux ou une zone ventrale de l'aéronef (belly fairing) ou, d'une façon générale, toute zone plus ou moins close et thermiquement sensible d'un aéronef pour laquelle un renouvellement d'air est souhaité.

A cette fin, selon l'invention, l'agencement d'entrée d'air pour aéronef comportant au moins un canal de passage d'air pourvu d'un orifice de prise d'air prélevant un flux d'air extérieur, des moyens d'obturation à plaque mobile commandable associés audit canal et des moyens de commande de ladite plaque mobile commandable permettant de faire varier la section transversale dudit canal entre une section transversale minimale autorisant un débit d'air minimal en direction d'une zone à ventiler dudit aéronef et une section transversale maximale autorisant un débit d'air maximal en direction de ladite zone, ladite plaque comportant une face externe soumise audit flux d'air et une face interne dirigée vers ledit canal, l'extrémité amont de ladite plaque étant reliée audit canal, au voisinage du bord amont dudit orifice de prise d'air, et l'extrémité aval de ladite plaque étant libre de se déplacer à travers la section transversale dudit canal, est remarquable :
- en ce que, lorsque ledit aéronef est en vol de croisière, le bord aval dudit orifice de prise d'air est apte à engendrer une pression élevée sur une zone aval limitée de ladite face externe ; et
- en ce que lesdits moyens de commande comportent des moyens de communication fluidique entre lesdites faces externe et interne de la plaque mobile, situés au moins à proximité de ladite zone aval limitée de ladite face externe et aptes à communiquer ladite pression élevée à une zone étendue de ladite face interne.

En effet, la Demanderesse a constaté qu'on pouvait faire en sorte qu'il existe sur la face externe de ladite plaque, au cours d'une phase de vol de croisière de l'aéronef (c'est-à-dire à vitesse et altitude élevées), une zone aval limitée de pression élevée au voisinage du bord aval (c'est-à-dire du bord d'attaque) de l'orifice de prise d'air et une zone amont de pression plus faible au voisinage du bord amont dudit orifice. En revanche, dès lors que l'aéronef est en phase de décollage, en phase d'attente ou en phase de roulage (donc à vitesse et altitude faibles), la pression dans la zone aval limitée diminue fortement, alors que celle dans la zone amont augmente sensiblement.

Ainsi, grâce à l'invention, au cours d'une phase de vol de croisière de l'aéronef, les moyens de communication fluidique permettent un alignement, au moins partiel, de la pression dans la zone étendue de la face interne de la plaque sur celle de la zone aval limitée de pression élevée, ce qui provoque le déplacement de la plaque et l'obturation partielle de la section transversale dudit canal. Au contraire, lors d'une phase de décollage, d'attente ou de roulage au sol, la pression faible au niveau de la zone aval limitée (et donc de la zone étendue) ne permet pas le déplacement de ladite plaque. En outre, notamment lors d'une phase de décollage, la pression alors élevée de la zone amont sur la face externe de la plaque mobile peut contribuer à maintenir ladite plaque dans une position telle que l'ouverture de la section transversale dudit canal reste maximale.

On obtient ainsi des moyens d'obturation automatiques en fonction de la pression au niveau de l'orifice de prise d'air (et donc de la vitesse et de l'altitude de l'aéronef), aptes à faire varier la section transversale dudit canal par lesdits moyens d'obturation et à modifier, selon les phases de vol de l'aéronef, le débit d'air entrant dans la zone confinée et, par conséquent, à ventiler au mieux les dispositifs concernés.

Par exemple, en vol de croisière d'un aéronef (vitesse et altitude élevées), la section transversale dudit canal est avantageusement et automatiquement réduite pour ventiler raisonnablement les dispositifs et limiter la traînée sur l'ensemble de la nacelle par l'air absorbé dans la zone confinée. En revanche, lors du roulage au sol de l'aéronef, ou en phase de décollage (vitesse et altitude faibles), la section transversale du canal est automatiquement ouverte au maximum par l'effacement de la plaque mobile desdits moyens d'obturation, pour faire circuler ainsi une quantité d'air maximale dans le canal et ventiler convenablement les dispositifs situés dans la zone confinée.

Ainsi, de plus, grâce à l'invention, la quantité d'air prélevé par l'agencement d'entrée d'air est adaptée à chaque phase de vol, ce qui minimise la pénalité des performances de l'aéronef due à la ventilation.

En outre, lesdits moyens de communication fluidique comportent de préférence un ou plusieurs passages entre ladite face externe et ladite face interne de la plaque, de manière à permettre au moins un alignement partiel de la pression dans la zone étendue sur celle de la zone aval limitée lors d'un vol de croisière de l'aéronef. Ces passages peuvent, par exemple, être des ouvertures (ouvertures circulaires, échancrures) ménagées directement dans la plaque mobile, des échancrures pratiquées dans les parois latérales du canal, des interstices entre les parois latérales du canal et les bords latéraux de la plaque mobile ou bien une combinaison de ceux-ci.

Par ailleurs, ledit canal de passage d'air étant délimité par au moins une paroi inférieure et une paroi supérieure, une cavité, recouverte par ladite plaque mobile, peut être avantageusement ménagée dans la paroi inférieure dudit canal de passage d'air, le long de ladite zone étendue.

De préférence, ledit canal de passage d'air peut comporter au moins une butée basse, permettant de marquer la position de ladite plaque correspondant à ladite section transversale maximale, et au moins une butée haute, permettant de marquer la position de ladite plaque correspondant à ladite section transversale minimale. Ces butées basses et hautes permettent de stabiliser et de limiter les vibrations de la plaque dans les positions d'ouverture respectivement maximale et minimale de la section transversale dudit canal.

En outre, ladite plaque peut être formée par une lame élastique, par exemple bombée, s'appliquant spontanément contre la butée basse du canal de passage d'air.

Dans le cas où lesdits moyens de communication fluidique sont constitués d'une pluralité de passages pratiqués dans ladite plaque (par exemple des ouvertures circulaires), ces passages peuvent être disposés sur au moins une ligne sensiblement parallèle à ladite section transversale dudit canal de passage d'air. Un de ces passages peut en outre être avantageusement obturé par ladite butée basse dudit canal de passage d'air, lorsque ladite lame élastique s'applique spontanément sur celle-ci, de manière à la stabiliser dans la position d'ouverture maximale de la section transversale dudit canal.

Par ailleurs, ledit canal de passage d'air peut présenter une section rectangulaire et la largeur de ladite plaque peut correspondre au moins approximativement à celle de ladite section transversale dudit canal.
Les figures du dessin annexé feront bien comprendre comment l'invention peut être réalisée. Sur ces figures, des références identiques désignent des éléments semblables.
La figure 1 est une représentation schématique partielle en perspective d'une nacelle de turboréacteur équipée d'un agencement d'entrée d'air conforme à l'invention.
La figure 2 représente schématiquement et partiellement en coupe la nacelle de la figure 1.
La figure 3 est une vue de face, en coupe transversale selon la ligne II-II de la figure 2, de ladite nacelle du turboréacteur, présentant différents dispositifs à ventiler.
La figure 4 est une vue schématique, en perspective, d'un exemple de réalisation de l'agencement d'entrée d'air de la figure 1 conforme à l'invention.
La figure 5 montre, en coupe longitudinale partielle, l'agencement d'entrée d'air de la figure 4.
Les figures 6 et 7 représentent, dans une vue analogue, de deux variantes de réalisation des passages de l'agencement d'entrée d'air de la figure 5.
La figure 8 est une vue selon la flèche IV de la figure 5, représentant autre variante de réalisation de l'agencement conforme à la présente invention.

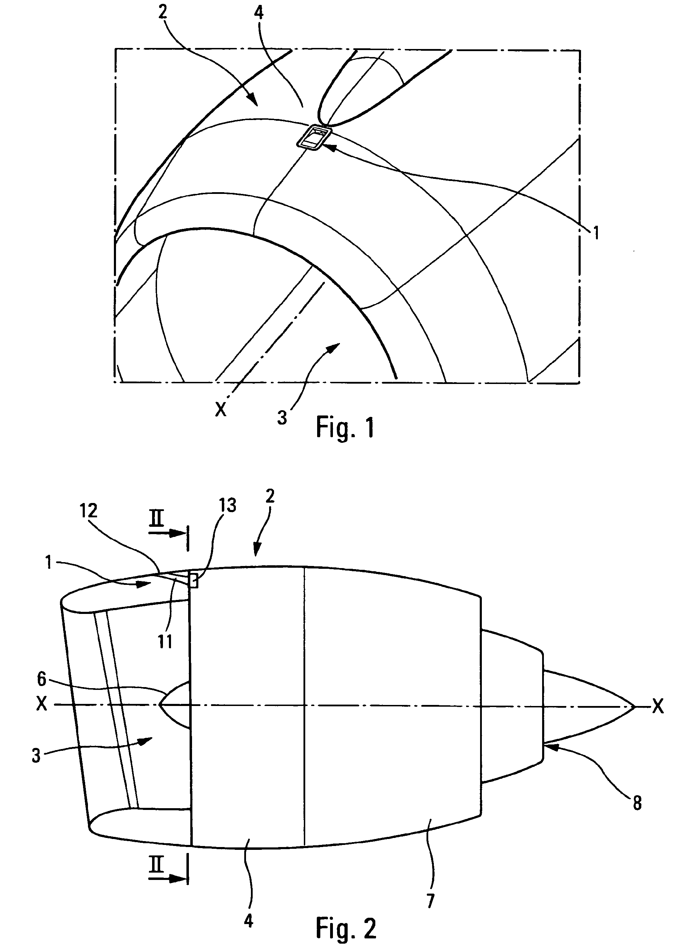

L'agencement d'entrée d'air 1, conforme à l'invention et représenté sur les figures 1 et 2, est prévu dans la nacelle 2 d'un moteur monté sur un aéronef (non représenté).

Comme le montrent schématiquement les figures 1 à 3, la nacelle comporte, de façon usuelle, une partie avant d'entrée d'air 3 destinée à alimenter en air le moteur, une partie intermédiaire 4, entourant le carter externe 5 de la soufflante 6 et les compresseurs du moteur, et une partie arrière 7, entourant la chambre de combustion et la turbine, d'où émerge le carter externe de la tuyère 8 et son cône.

Différents dispositifs ou équipements mécaniques et/ou électriques 9 sont rapportés sur le carter externe 5 de la soufflante 6 et des compresseurs, c'est-à-dire dans la zone annulaire 10 confinée entre la nacelle 2 et le carter externe 5 du moteur. On a représenté symboliquement, sur la figure 2, certains des dispositifs 9 disposés dans cette zone 10, à savoir le fadec 9A, le boîtier relais d'accessoires 9B et le réservoir d'huile moteur 9C.

Le renouvellement de l'air dans cette zone confinée 10, pour maintenir les dispositifs 9 dans une plage de température appropriée et permettre leur bon fonctionnement, est assuré par l'agencement d'entrée d'air 1 qui est situé en haut de la partie aval de la nacelle 2 et qui comporte, à cet effet, un canal de passage d'air 11 ménagé dans la paroi structurelle de la partie avant de la nacelle 2 et mettant en communication l'air extérieur avec la zone confinée 10. Pour cela, le canal 11 présente, en amont, un orifice de prise d'air 12 et, en aval, un diffuseur 13 en relation avec ladite zone 10, débouchant dans la partie intermédiaire 4 de la nacelle 2.

Le canal de passage d'air 11 est légèrement incliné par rapport à la surface extérieure de la partie avant de la nacelle 2 et se dirige en aval vers l'axe longitudinal X-X du moteur pour prélever et amener au mieux l'air extérieur frais dans le canal 11 et l'évacuer ensuite tangentiellement par le diffuseur 13 à double sortie, comme le montrent les flèches f sur la figure 2, des deux côtés de la zone confinée annulaire 10.

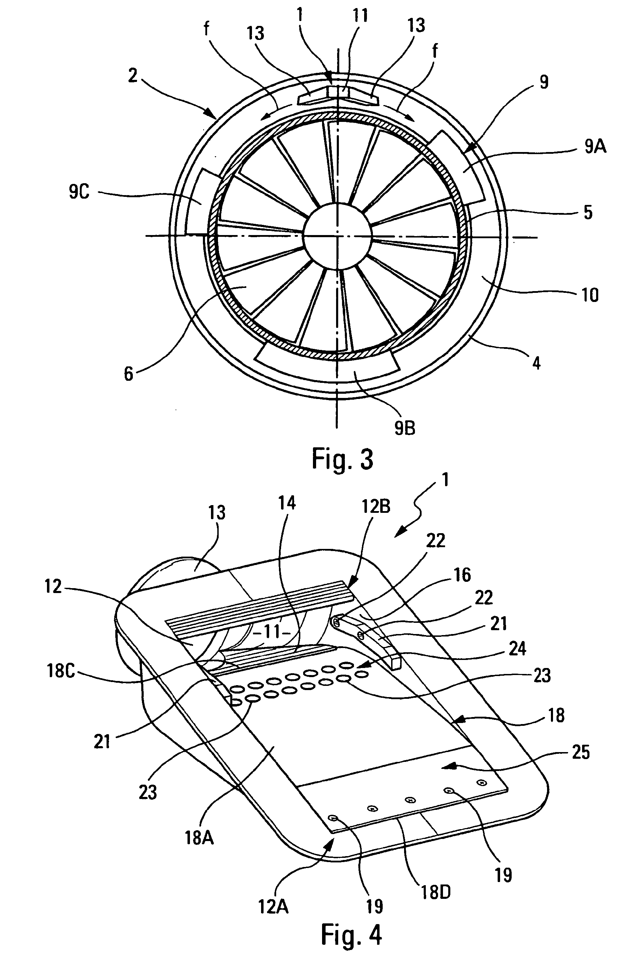

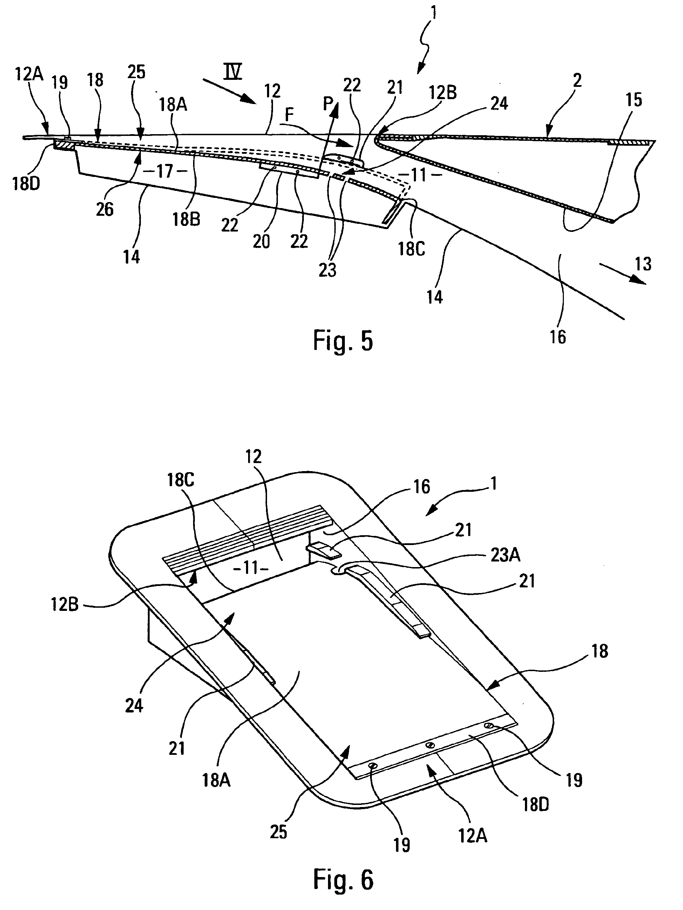

Dans l'exemple représenté sur les figures 4 et 5, le profil du canal 11 de l'agencement 1 est légèrement évolutif, c'est-à-dire qu'après avoir convergé en aval de son orifice de prise d'air tangentiel 12, il diverge quelque peu en direction du diffuseur 13 et sa section transversale est rectangulaire. Le canal 11 est délimité par une paroi inférieure 14, une paroi supérieure 15 et deux parois latérales 16 et 17 opposées.

Conformément à la présente invention, la section transversale du canal de passage d'air 11 est rendue réglable grâce à des moyens d'obturations commandés par la pression locale au niveau de l'orifice de prise d'air 12 et aptes à réguler le débit d'air circulant dans le canal 11, en direction du diffuseur 13.

Dans la réalisation représentée sur les figures 4 et 5, une cavité 17 de forme rectangulaire est ménagée dans la paroi inférieure 14 du canal 11. Cette cavité 17 s'étend, en largeur, sur la largeur du canal 11 et, en longueur, du bord amont 12A de l'orifice de prise d'air 12 jusque dans l'intérieur du canal 11, relativement profondément.

Les moyens d'obturation de la section transversale du canal 11 comportent une lame élastique bombée 18 de forme rectangulaire dont la largeur est très légèrement inférieure à la largeur du canal de passage d'air 11. L'extrémité amont 18D de la lamé 18 est fixée, par exemple au moyen de vis 19, sur la paroi inférieure 14 du canal 11, au voisinage de le bord amont 12A de l'orifice de prise d'air 12. En revanche, l'extrémité aval 18C de la lame 18 est libre et intérieure au canal de passage d'air 11. En outre, la lame élastique 18 recouvre la cavité 17.

Une butée basse 20 et une butée haute 21 sont fixées sur chacune des parois latérales 16 de la cavité 17, par exemple au moyen de vis 22, de telle sorte que les deux butées basses 20 soient en vis-à-vis l'une de l'autre, tout comme les butées hautes 21.

Lorsque l'aéronef est en phase de roulage au sol, de décollage ou d'attente (donc à altitude et vitesse faibles), la lame élastique 18 s'applique spontanément contre chacune des butées basses 20 des parois latérales 16.

Comme le montrent les figures 4 et 5, des passages sous forme d'ouvertures circulaires 23 sont pratiqués dans la lame élastique 18. Ces ouvertures circulaires 23 sont alignées sur deux largeurs de la lame 18, légèrement en amont du bord aval 12B de l'orifice de prise d'air 12, dans une zone aval limitée 24 sur la face externe 18A de la lame 18 où la pression externe est élevée lorsque l'aéronef est dans une phase de vol de croisière.

En effet, lorsque l'aéronef portant la nacelle 2 se déplace, un flux d'air (symbolisé par la flèche F sur la figure 5) pénètre dans le canal de passage d'air 11 à travers l'orifice de prise d'air 12. Il se crée alors, en fonction des phases de vol de l'aéronef, deux zones de pression distinctes, une zone amont 25 et la zone aval limitée 24 introduite ci-dessus, situées sur la face externe 18A de la lame 18 au voisinage des bords respectivement amont 12A et aval 12B de l'orifice de prise d'air 12, les pressions dans les zones aval 24 et amont 25 variant de façon antagoniste selon les phases de vol de l'aéronef.

Ainsi, quand l'aéronef est en phase de vol de croisière, la pression élevée dans la zone aval limitée 24 est communiquée, par l'intermédiaire des ouvertures 23, à la cavité 17, ce qui engendre une force de pression (symbolisée par la flèche P sur la figure 5) sur une zone étendue 26 de la face interne 18B de la lame élastique 18. La force de pression P tend à écarter la lame élastique 18, à l'encontre son élasticité propre, des butées basses 20 (sur lesquelles elle reposait spontanément) et à la rapprocher des butées hautes 21. La lame élastique 18 fait alors office d'obturateur.

De façon évidente, la déformation de la lame élastique 18 dans le sens de l'obturation est d'autant plus grande que la force de pression P est plus élevée. L'obturation maximale du canal 11 par la lame élastique 18 est fixée par les butées hautes 21, aptes à coopérer avec la face externe de la lame élastique 18 pour la stabiliser et en limiter les vibrations.

Ainsi, la section de passage du flux d'air F dans le canal 11 peut varier, en fonction de la pression au niveau des ouvertures 23, entre une valeur maximale, pour laquelle la lame élastique 18 est appliquée contre les butées basses 20, et une valeur minimale, déterminée par les butées hautes 21.

Dans le mode de réalisation représentée en figure 6, la pluralité d'ouvertures circulaires 23 de la lame élastique 18 (figures 4 et 5) est remplacée par une échancrure circulaire 23A pratiquée sur chacun des deux bords latéraux de la lame élastique 18 au voisinage de ladite zone aval limitée 24.

En outre, chaque butée haute 21 de l'agencement 1 (figures 4 et 5) est remplacée par deux butées hautes 21 suffisamment écartées l'une de l'autre pour que l'échancrure 23A ne soit pas obturée lorsque la lame élastique 18 est plaquée contre lesdites butées hautes 21.

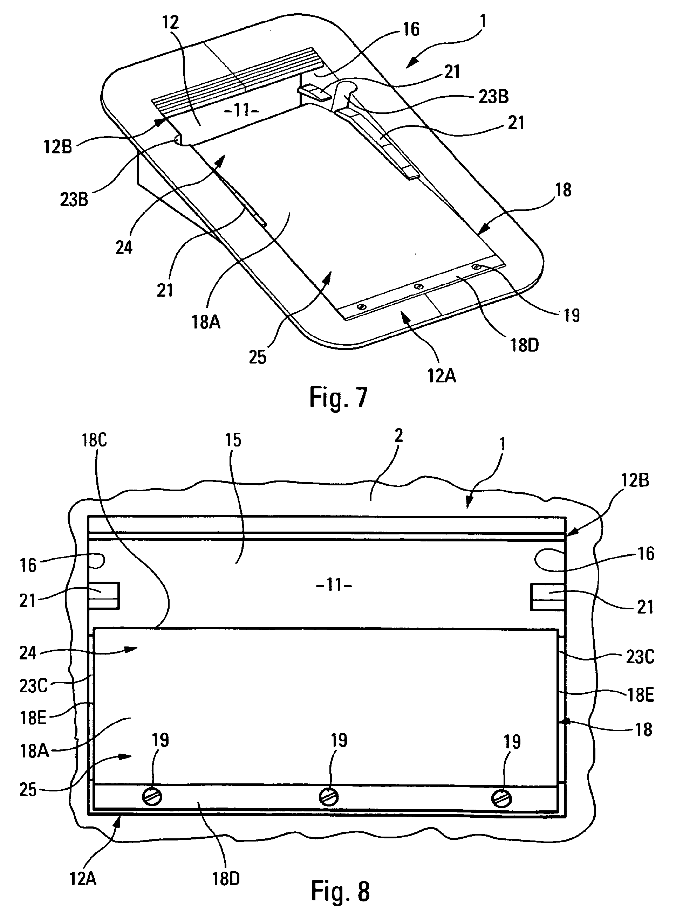

Par ailleurs, dans la variante de réalisation illustrée en figure 7, une échancrure 23B, formant un passage entre les faces externe 18A et interne 18B de ladite lame 18, est pratiquée dans chacune des parois latérales 16 du canal de passage d'air 11, se substituant ainsi aux ouvertures circulaires 23 (figure 5).

Dans la variante de réalisation de la figure 8, les ouvertures circulaires 23 de la figure 5 sont remplacées par des interstices 23C définis entre les parois latérales 16 du canal de passage d'air 11 et les bords latéraux 18E de ladite plaque mobile 18 opposés aux parois 16.

## Revendications

1. Agencement d'entrée d'air (1) pour aéronef comportant au moins un canal de passage d'air (11) pourvu d'un orifice de prise d'air (12) prélevant un flux d'air extérieur (F), des moyens d'obturation à plaque mobile commandable (18) associés audit canal (11) et des moyens de commande de ladite plaque mobile commandable (18) permettant de faire varier la section transversale dudit canal (11) entre une section transversale minimale autorisant un débit d'air minimal en direction d'une zone à ventiler (10) dudit aéronef et une section transversale maximale autorisant un débit d'air maximal en direction de ladite zone (10), ladite plaque (18) comportant une face externe (18A) soumise audit flux d'air (F) et une face interne (18B) dirigée vers ledit canal (11), l'extrémité amont (18D) de ladite plaque (18) étant reliée audit canal (11), au voisinage du bord amont (12A) dudit orifice de prise d'air (12), et l'extrémité aval (18C) de ladite plaque (18) étant libre de se déplacer au travers de la section transversale dudit canal (11), et ladite plaque (18) étant maintenue dans la position correspondant à la section transversale maximale lorsque ledit aéronef est en place de décollage, d'attente ou de roulage et la pression au niveau d'une zone aval limitée (24) de ladite face externe (18A) est par conséquent faible,
**caractérisé :**
- **en ce que**, lorsque ledit aéronef est en vol de croisière, le bord aval (12B) dudit orifice de prise d'air (12) est apte à engendrer une pression élevée sur ladite zone aval limitée (24) de ladite face externe (18A) ; et
- **en ce que** lesdits moyens de commande comportent des moyens de communication fluidique entre lesdites faces externe (18A) et interne (18B) de la plaque mobile (18), situés au moins à proximité de ladite zone aval limitée (24) de ladite face externe (1 8A) et aptes à communiquer ladite pression élevée à une zone étendue (26) de ladite face interne (18B).

2. Agencement selon la revendication 1,
**caractérisé en ce que** lesdits moyens de communication fluidique comportent au moins un passage entre ladite face externe (18A) et ladite face interne (18B) de la plaque (18).

3. Agencement selon la revendication 2,
**caractérisé en ce que** chaque passage est constitué d'une ouverture (23) ménagée dans ladite plaque mobile (18).

4. Agencement selon la revendication 2, dans lequel ledit canal de passage d'air (11) comporte des parois inférieure (14) et supérieure (15) en regard et deux parois latérales (16) opposées,
**caractérisé en ce que** chaque passage est formé par une échancrure (23B) pratiquée dans une des parois latérales (16) dudit canal (11).

5. Agencement selon la revendication 2, dans lequel ledit canal de passage d'air (11) comporte des parois inférieure (14) et supérieure (15) en regard et deux parois latérales (16) opposées,
**caractérisé en ce que** chaque passage est un interstice (23C) formé entre une des parois latérales (16) dudit canal (11) et le bord latéral (18E) opposé de ladite plaque mobile (18).

6. Agencement selon l'une des revendications 1 à 5, dans lequel ledit canal de passage d'air (11) est délimité par au moins une paroi inférieure (14) et une paroi supérieure (15) en regard,
**caractérisé en ce qu'**une cavité (17), recouverte par ladite plaque mobile (18), est ménagée dans la paroi inférieure (14) dudit canal de passage d'air (11), le long de ladite zone étendue (26).

7. Agencement selon l'une des revendications 1 à 6,
**caractérisé en ce que** ledit canal de passage d'air (11) comporte au moins une butée basse (20), permettant de marquer la position de ladite plaque (18) correspondant à ladite section transversale maximale, et au moins une butée haute (21), permettant de marquer la position de ladite plaque (18) correspondant à ladite section transversale minimale.

8. Agencement selon la revendication 7,
**caractérisé en ce que** ladite plaque (18) est formée par une lame élastique s'appliquant spontanément contre la butée basse (20) du canal de passage d'air (11).

9. Agencement selon l'une des revendications 1 à 8,
**caractérisé en ce que**, lesdits moyens de communication fluidique étant constitués d'une pluralité de passages (23) ménagés dans ladite plaque (18), lesdits passages (23) sont disposés sur au moins une ligne sensiblement parallèle à ladite section transversale dudit canal de passage d'air (11).

10. Agencement selon l'une des revendications 1 à 9,
**caractérisé en ce que** ledit canal de passage d'air (11) présente une section rectangulaire et **en ce que** la largeur de ladite plaque (18) correspond au moins approximativement à celle de ladite section transversale dudit canal (11).

## Claims

1. An air intake arrangement (1) for an aircraft comprising at least one air passage channel (11) provided with an air intake hole (12) taking an external air flow (F), plugging means with controllable mobile plate (18) associated with said channel (11) and means for controlling said controllable mobile plate (18) allowing to vary the cross-section of said channel (11) between a minimum cross-section enabling a minimum air flow rate toward an area to be ventilated (10) of said aircraft and a maximum cross-section enabling a maximum air flow rate toward said area (10), said plate (18) comprising an external side (18A) subjected to said air flow (F) and an internal side (18B) directed toward said channel (11), the upstream end (18D) of said plate (18) being connected to said channel (11), in the vicinity of the upstream edge (12A) of said air intake hole (12), and the downstream end (18C) of said plate (18) being free to move through the cross-section of said channel (11), and said plate (18) being maintained in the position corresponding to the maximal cross-section when said aircraft is in a takeoff, waiting or ground taxiing phase and the pressure on a limited downstream area (24) of said external side (18A) is consequently low, **characterized in that**:
- when said aircraft is in a cruising flight, the downstream edge (12B) of said air intake hole (12) is able to generate a high pressure on said limited downstream area (24) of said external side (18A); and
- said controlling means comprise fluid communication means between said external (18A) and internal (18B) sides of the mobile plate (18), located at least in the vicinity of said limited downstream area (24) of said external side (18A) and able to communicate said high pressure to an extended area (26) of said internal side (18B).

2. The arrangement according to claim 1,
**characterized in that** said fluid communication means comprise at least one passage between said external side (18A) and said internal side (18B) of the plate (18).

3. The arrangement according to claim 2,
**characterized in that** each passage comprises an opening (23) arranged in said mobile plate (18).

4. The arrangement according to claim 2, wherein said air passage channel (11) comprises opposite lower (14) and higher (15) walls and two opposite side walls (16),
**characterized in that** each passage comprises an indentation (23B) arranged in one of the side walls (16) of said channel (11).

5. The arrangement according to claim 2, wherein said air passage channel (11) comprises opposite lower (14) and higher (15) walls and two opposite side walls (16),
**characterized in that** each passage is an interstice (23C) formed between one of the side walls (16) of said channel (11) and the opposite side edge (18E) of said mobile plate (18).

6. The arrangement according to any of claims 1 to 5, wherein said air passage channel (11) is bound by at least one lower (14) and one higher (15) walls being opposite,
**characterized in that** a cavity (17), covered by said mobile plate (18), is arranged in the lower wall (14) of said air passage channel (11), along said extended area (26).

7. The arrangement according to any of claims 1 to 6,
**characterized in that** said air passage channel (11) comprises at least one low abutment (20), allowing to mark the position of said plate (18) corresponding to said maximum cross-section, and at least one high abutment (21), allowing to mark the position of said plate (18) corresponding to said minimum cross-section.

8. The arrangement according to claim 7,
**characterized in that** said plate (18) is formed by a resilient blade spontaneously applying against the low abutment (20) of the air passage channel (11).

9. The arrangement according to any of claims 1 to 8,
**characterized in that**, said fluid communication means comprising a plurality of passages (23) arranged in said plate (18), said passages (23) are arranged on at least one line substantially parallel to said cross-section of said air passage channel (11).

10. The arrangement according to any of claims 1 to 9,
**characterized in that** said air passage channel (11) has a rectangular section and **in that** the width of said plate (18) corresponds at least approximately to that of said cross-section of said channel (11).

## Patentansprüche

1. Lufteinlassanordnung (1) für ein Flugzeug, aufweisend mindestens einen Luftdurchflusskanal (11), der mit einer Luftansaugöffnung (12) versehen ist, die einen Außenluftstrom (F) entnimmt, Verschlussmittel mit steuerbarer, beweglicher Platte (18), die dem Kanal (11) zugeordnet sind, und Mittel zur Steuerung der steuerbaren, beweglichen Platte (18), die es ermöglichen, den Querschnitt des Kanals (11) zwischen einem minimalen Querschnitt, der einen minimalen Luftdurchfluss in Richtung einer zu belüftenden Zone (10) des Flugzeugs zulässt, und einem maximalen Querschnitt, der einen maximalen Luftdurchfluss in Richtung der Zone (10) zulässt, variieren zu lassen, wobei die Platte (18) eine Außenfläche (18A), die dem Luftstrom (F) ausgesetzt ist, und eine Innenfläche (18B), die zu dem Kanal (11) hin gerichtet ist, aufweist, wobei das stromaufwärts gelegene Ende (18D) der Platte (18) mit dem Kanal (11) verbunden ist, in der Nähe des stromaufwärts gelegenen Randes (12A) der Luftansaugöffnung (12), und das stromabwärts gelegene Ende (18C) der Platte (18) sich durch den Querschnitt des Kanals (11) hindurch frei bewegen kann, und wobei die Platte (18) in der Position gehalten wird, die dem maximalen Querschnitt entspricht, wenn sich das Flugzeug in der Phase des Abfliegens, des Wartens oder des Rollens befindet und der Druck im Bereich einer begrenzten stromabwärts gelegenen Zone (24) der Außenfläche (18A) folglich gering ist,
**dadurch gekennzeichnet,**
**dass**, wenn sich das Flugzeug im Reiseflug befindet, der stromabwärts gelegene Rand (12B) der Luftansaugöffnung (12) dafür geeignet ist, einen erhöhten Druck auf die begrenzte stromabwärts gelegene Zone (24) der Außenfläche (18A) zu erzeugen; und
**dass** die Steuerungsmittel Mittel für die Strömungskommunikation zwischen der Außenfläche (18A) und der Innenfläche (18B) der beweglichen Platte (18) aufweisen, die sich mindestens in der Nähe der begrenzten stromabwärts gelegenen Zone (24) der Außenfläche (18A) befinden und dafür geeignet sind, den erhöhten Druck an eine ausgedehnte Zone (26) der Innenfläche (18B) zu kommunizieren.

2. Anordnung nach Anspruch 1, **dadurch gekennzeichnet, dass** die Mittel für die Strömungskommunikation mindestens einen Durchlass zwischen der Außenfläche (18A) und der Innenfläche (18B) der Platte (18) aufweisen.

3. Anordnung nach Anspruch 2, **dadurch gekennzeichnet, dass** jeder Durchlass von einer Öffnung (23) gebildet ist, die in der beweglichen Platte (18) vorgesehen ist.

4. Anordnung nach Anspruch 2, wobei der Luftdurchlasskanal (11) untere (14) und obere (15) Wände, die einander zugewandt sind, und zwei gegenüberliegende seitliche Wände (16) aufweist, **dadurch gekennzeichnet, dass** jeder Durchlass von einem Ausschnitt (23B) gebildet ist, der in einer der seitlichen Wände (16) des Kanals (11) ausgebildet ist.

5. Anordnung nach Anspruch 2, wobei der Luftdurchlasskanal (11) untere (14) und obere (15) Wände, die einander zugewandt sind, und zwei gegenüberliegende seitliche Wände (16) aufweist, **dadurch gekennzeichnet, dass** jeder Durchlass ein Zwischenraum (23C) ist, der zwischen einer der seitlichen Wände (16) des Kanals (11) und dem gegenüberliegenden seitlichen Rand (18E) der beweglichen Platte (18) gebildet ist.

6. Anordnung nach einem der Ansprüche 1 bis 5, wobei der Luftdurchlasskanal (11) durch mindestens eine untere Wand (14) und eine obere Wand (15), die einander zugewandt sind, begrenzt wird, **dadurch gekennzeichnet, dass** ein Hohlraum (17), der durch die bewegliche Platte (18) abgedeckt ist, in der unteren Wand (14) des Luftdurchlasskanals (11), entlang der ausgedehnten Zone (26), vorgesehen ist.

7. Anordnung nach einem der Ansprüche 1 bis 6, **dadurch gekennzeichnet, dass** der Luftdurchlasskanal (11) mindestens einen unteren Anschlag (20) aufweist, der es ermöglicht, die Position der Platte (18) zu markieren, die dem maximalen Querschnitt entspricht, und mindestens einen oberen Anschlag (21) aufweist, der es ermöglicht, die Position der Platte (18) zu markieren, die dem minimalen Querschnitt entspricht.

8. Anordnung nach Anspruch 7, **dadurch gekennzeichnet, dass** die Platte (18) von einer Federlasche gebildet ist, die sich von selbst gegen den unteren Anschlag (20) des Luftdurchlasskanals (11) anlegt.

9. Anordnung nach einem der Ansprüche 1 bis 8, **dadurch gekennzeichnet, dass**, da die Mittel für die Strömungskommunikation von einer Vielzahl von Durchlässen (23), die in der Platte (18) vorgesehen sind, gebildet sind, die Durchlässe (23) auf mindestens einer Linie angeordnet sind, die im Wesentlichen parallel zu dem Querschnitt des Luftdurchlasskanals (11) ist.

10. Anordnung nach einem der Ansprüche 1 bis 9, **dadurch gekennzeichnet, dass** der Luftdurchlasskanal (11) einen rechteckigen Querschnitt aufweist und dass die Breite der Platte (18) mindestens annähernd der des Querschnitts des Kanals (11) entspricht.
